# EUROPEAN PATENT SPECIFICATION

(11) **EP 3 113 497 B1**
(45) Date of publication and mention of the grant of the patent: **04.03.2020**
(21) Application number: 15306025.6
(22) Date of filing: 29.06.2015
(51) Int. Cl.: H04N 21/41, G06Q 50/10, H04N 21/643, H04N 21/647

(54) **MULTIPLE AUDIO TRACKS**
MEHRERE AUDIOSPUREN
MULTIPLES PISTES AUDIO

(43) Date of publication of application: 04.01.2017
(73) Proprietor: ORANGE, 75015 Paris (FR)
(72) Inventor: PAWLIKOWSKI, Tomasz, 00-414 WARSAWA (PL); KIENIG, Jan, 00-021 WARSZAWA (PL); KUBA, Miroslaw, 04-921 WARSAWA (PL); ZIELINSKI, Wojciech, 03-291 WARSZAWA (PL); BUDNY, Pawel, 01-651 WARSZAWA (PL)
(74) Representative: Plasseraud IP

(56) References cited:
- JP-A- 2010 068 016
- US-A1- 2005 108 026
- US-A1- 2014 040 189
- US-A1- 2014 157 325

## Description

### Background

### Technical field

The present invention relates to the provision of audio tracks or captions for content that is displayed to a viewer. In particular, the invention relates to the provision of audio tracks or captions that are in a different language or format to those present in the content displayed. More particularly still, the invention relates to the provision of audio tracks or captions for an environment such as a cinema to allow a user to either listen to a different audio track to that provided with the film, and/or to view captions to accompany the film.

### Related art

When providing content to a viewer, it is a known to provide different audio tracks and/or subtitles (captions) to allow viewers who do not understand the original language of the content to be able to understand the content. Thus, for example, DVDs can be provided with several different audio tracks and/or subtitles in different languages. To access the different audio tracks or the subtitles, the user will in general select the desired audio/subtitles from a menu prior to commencing viewing of the DVD.

In a cinema environment, where there will typically be a large audience, it can often be the case that different members of the audience have different needs regarding the audio and subtitles, and thus a problem exists since it is not normally possible to present a film in several different languages at once to a single audience. Moreover, if only a limited number of viewers wish to have subtitles, then providing them on the film can be distracting and annoying to the other members of the audience.

Whilst films can be dubbed into different languages, and shown at different times, or in different cinema screens, to accommodate a varied audience, this is a poor use of resources since it can result in cinemas being only partially filled, especially if the screening is in a language that has little demand.

There is therefore a need for a system that can individually provide audio tracks and/or subtitles on an on-demand basis.

US2008/0119177 discloses a system for delivering metadata content that is relevant to a particular wireless access point. Thus, location-based information relevant to an area local to the access point can be provided to a user's device when the user is close to the access point.

US2005/108026 relates to a personalized subtitle system which can be used in a movie theatre to provide subtitles in a variety of languages.

JP2010 068016 relates to a method and apparatus for synchronizing the timing between a movie and subtitles for the movie stored in a server.

It is therefore an aim of the present invention to overcome, or at least mitigate, some of the above described problems.

### Summary

In a first aspect, there is provided a server for providing a service to deliver a data stream to an electronic device according to claim 1.

In some embodiments, the wireless network comprises a plurality of APs each having a different ID, and the connection request is received from a first of the plurality of APs. Thus, advantageously, the server can provide different metadata related to the different APs, which can in turn be located in different physical locations. As a result, the server can select appropriate metadata for the different physical locations.

In some embodiments, the retrieval is further based on information regarding a physical location of the electronic device with respect to one or more of the APs. Thus, advantageously, the server can have accurate information of the electronic device to aid in ensuring that relevant metadata is provided.

In some embodiments, the positioning information is derived from signal strength data of the electronic device as received at a plurality of the APs or on satellite positioning data of the electronic device or from a measure of the signal strength data of the AP at the electronic device, or on satellite positioning data of the electronic device.

In some embodiments, the server is further configured to:
receive a correction request from the first AP; and,
retrieve, based on the time stamp and the ID of a second AP in the network, a second plurality of data streams associated in a database with the second AP;
send to the AP, metadata describing the second plurality of data streams, the metadata further comprising the electronic device ID; and
receive from the AP, in response to the sending of the second plurality of data streams, information indicating a selection of one of the second plurality of data streams and the electronic device ID.

Thus, advantageously, the server can provide a corrected set of metadata in the event that an error was made when sending the first set of metadata.

In some embodiments the, or each, selection received is derived as a result of the server sending a request to the AP regarding a language of the electronic device. Thus, advantageously, the server can automatically select a suitable data stream to send on the basis of a language set in the electronic device. Thus, the need for the user to make the selection can be avoided.

In some embodiments, there is provided a wireless network comprising the server of any of the other embodiments and one or more APs.

In some embodiments including the wireless network comprising a plurality of APs, each of the APs is configured to use the same broadcast ID for communication with electronic devices connecting to the wireless network. Thus, advantageously, an electronic device connecting to the network can use the same connection details for any point in the network, and can move connection from one AP to another within the network without needing to re-establish the connection.

In a second aspect, there is provided a method for providing a service for delivering a data stream to an electronic device from a server via a wireless network according to claim 2.

In further aspects there is provided a computer program product comprising computer readable instructions which, when implemented on a processor perform all of the steps of the method of the second aspect, and a computer readable medium comprising such a computer program.

### Brief description of the drawings

The invention will now be described with reference to the accompanying Figures of which:
Figure 1 illustrates a wireless network in accordance with an embodiment of the invention;
Figure 2 illustrates an application of the wireless network of figure 1 as applied to a multi-screen cinema;
Figure 3 illustrates a flow chart for a method according to an aspect of the invention as performed on the wireless network of figures 1 and 2;
Figure 4 illustrates screens of a user interface to be displayed on an electronic device during performance of the method of figure 3; and
Figure 5 illustrates supplementary steps in a method according to an embodiment of the invention.

### Detailed Description

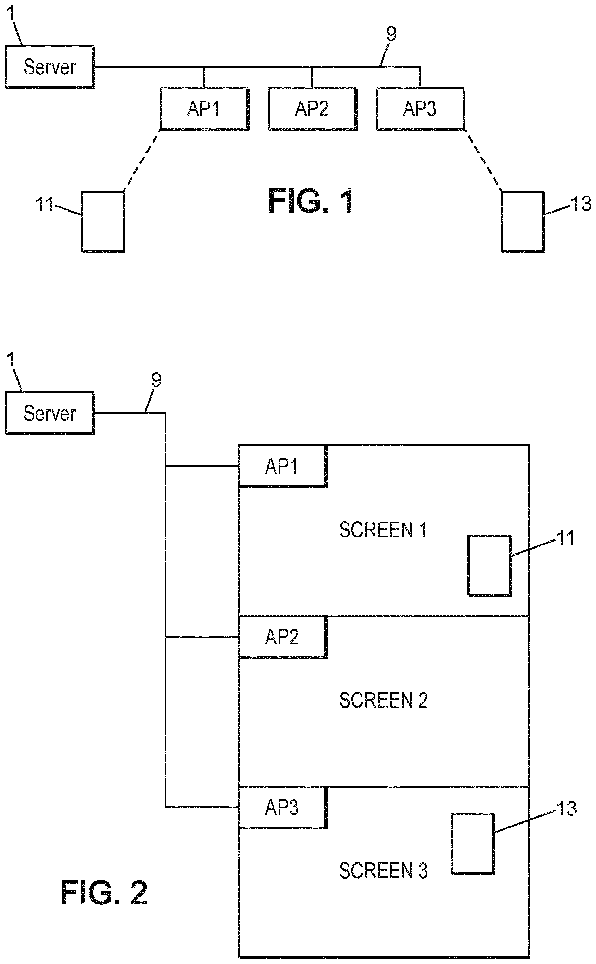

Figure 1 illustrates a structure of a wireless network 15 in accordance with an embodiment of the invention. The wireless network comprises a server 1 which is
retrieving, based on a time stamp related to the connection request and the AP ID, a plurality of data streams associated in a database with the AP;
sending to the AP, metadata describing the plurality of data streams, the metadata further comprising the electronic device ID;
receiving from the AP, in response to the sending, information indicating a selection of one of the plurality of data streams and the electronic device ID; and
sending, to the AP, the selected data stream tagged with the electronic device ID, so that the AP may push said data stream to the electronic device.

In further aspects there is provided a computer program product comprising computer readable instructions which, when implemented on a processor perform all of the steps of the method of the second aspect, and a computer readable medium comprising such a computer program.

### Brief description of the drawings

The invention will now be described with reference to the accompanying Figures of which:
Figure 1 illustrates a wireless network in accordance with an embodiment of the invention;
Figure 2 illustrates an application of the wireless network of figure 1 as applied to a multi-screen cinema;

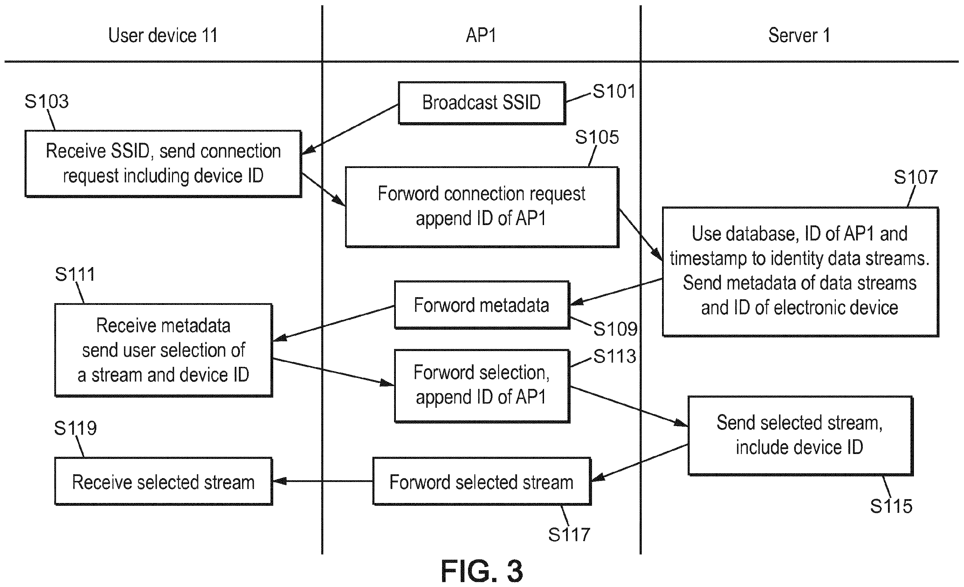

Figure 3 illustrates a flow chart for a method according to an aspect of the invention as performed on the wireless network of figures 1 and 2;

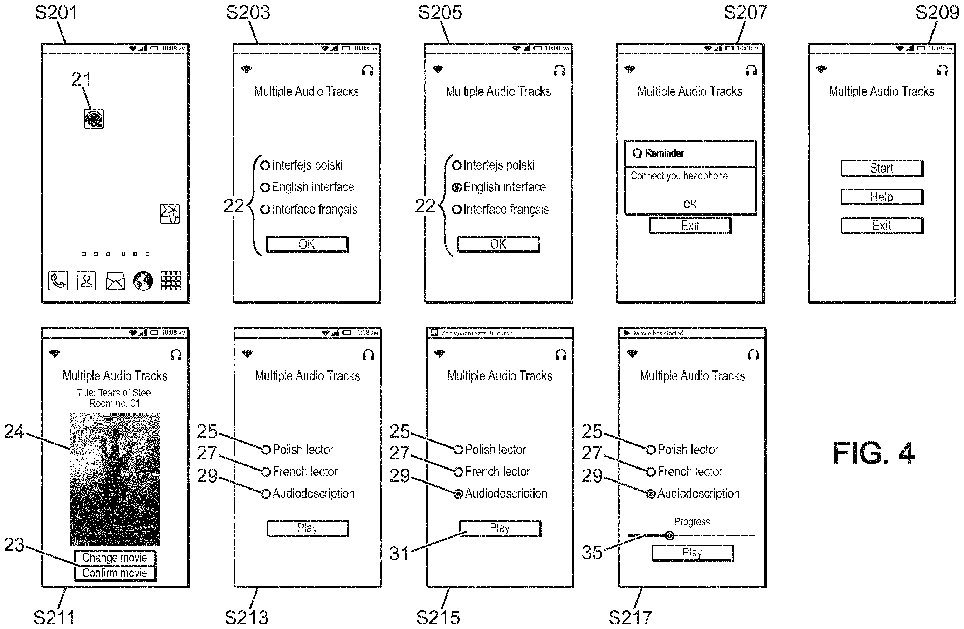

Figure 4 illustrates screens of a user interface to be displayed on an electronic device during performance of the method of figure 3; and

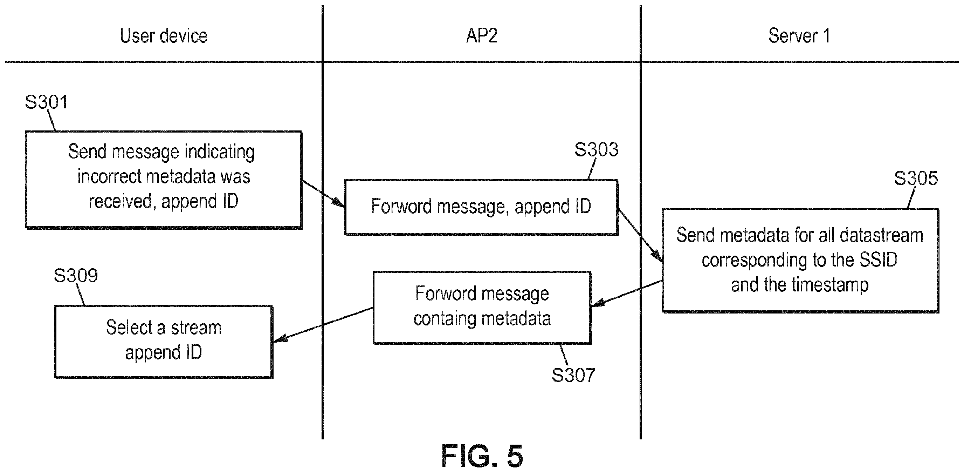

Figure 5 illustrates supplementary steps in a method according to an embodiment of the invention.

### Detailed Description

Figure 1 illustrates a structure of a wireless network 15 in accordance with an embodiment of the invention. The wireless network comprises a server 1 which is connected to a plurality of access points API, AP2 and AP3 via a data connection 9, such as an Ethernet connection. The skilled person will recognise that another server (not shown) can also be present to manage the wireless network 15, and that this server can, optionally, be present in the same device as the server 1. The skilled person will recognise that other methods of data connection, both wired and wireless, can alternatively be used and that the particular connection technology used is not of relevance to the invention. The server 1 can exchange data with each of the access points API, AP2, AP3 via the data connection 9. The access points (APs) are wireless APs, and can, for example, be based on Wi-Fi (IEEE 802.11) technology, and for clarity, the example of figure 1 will be explained in terms of this technology. However, the skilled person will recognise that other technologies for providing access points, both wired and wireless, can alternatively be used and that the particular access point technology used is not of relevance to the invention.

As illustrated in the example of figure 1, two user devices 11, 13 are connected to the wireless network 15 via wireless connections. A first user device 11 is illustrated as being connected to a first AP, API, while a second user device 13 is illustrated as being connected to a different AP, AP3. The user devices can, for example, be mobile terminals, tablet computers, laptop computer or other mobile device that are configured for wireless connectivity with a network.

In Wi-Fi technology, each access point has an identifier termed a service set identifier (SSID). This is a unique identifier for the wireless local area network (LAN). When establishing a connection with the wireless network 15, an electronic device uses the SSID to identify the network to which it wishes to connect. Optionally, a password for access can also be demanded, however in the example described here, no password is set to be required.

Using Wi-Fi technology, different APs on the same wireless network can either be configured to have different SSIDs or to all have the same SSID. In the example provided here, it is assumed that each AP API, AP2, AP3 has the same SSID. To establish a connection to the wireless network 15, an electronic device and an AP must undergo a connection procedure. In the wireless network 15 of figure 1, in the event that the user device 11 can receive signals from more than one AP having the same SSIDs, then it will, by default, attempt to establish a connection with the AP that has the strongest received signal at the user device 11. Typically, the strongest received signal will be from the AP to which the user device is physically closest. Thus, user device 11 is illustrated as connected to AP1 while user device 13 is illustrated as connected to AP3.

The server 1 is configured to store data streams that contain different audio tracks for content and/or subtitles for the content. Typically, the audio tracks will contain the speech from the content in a language other than that originally provided with the content. Thus, by sending a data stream to a user device that is being used by a user viewing the content, the user device can be configured to provide an alternative audio track or subtitles for content currently being viewed by the user. The term "sending" as employed here is used to describe the process of transmission of a data stream from the server, to the AP and ultimately to the user device 11. In the example provided here the pull/get model of sending a data stream, wherein the request for the transmission of information is initiated by the user device 11. However, the skilled person will recognise that equally the request for the stream can be initiated by the server 1 using a server push transmission method.

Typically, the server 1 will store multiple data streams for each content so that different audio tracks or subtitles in different languages can be provided upon selection by a user. Moreover, typically, the server 1 will store data streams for multiple different content, e.g. multiple different films. Thus, for example, a single server 1 can provide audio tracks and/or subtitles for many different screens in a cinema even if each screen is showing a different film. The server 1 also stores information indicating times at which each content is being shown and on which screen, together with metadata for the content. The metadata comprises information related to the content, such as the languages in which audio and/or subtitles are available, a title, a graphical image representing the content and/or a description of the content.

Figure 2 illustrates an application of the wireless network of figure 1 as applied to a multi screen cinema. The cinema, as an example only, comprises three screens, each housed in a different room. Each screen is accompanied in its room by an access point. Thus AP1 is with screen1, AP2 is with screen2 and AP3 is with screen3. The screens are configured to display content, such as a film, to an audience. Present in the room with screen1 is a user having user device 11, and present in the room with screen3 is a user with a user device 13.

Thus, as noted above in relation to figure 1, user device 11 is likely to establish a wireless connection with API, while user device 13 is likely to establish a connection with AP3. Upon establishing the wireless connections, the user devices 11, 13 can exchange information with the server 1.

Figure 3 illustrates a procedure for establishing a connection between an electronic device 11 and the server 1 using the wireless network 15 illustrated in figure 1 and 2.

The skilled person will understand the steps in the method for establishing a connection between a user device and an wireless network using Wi-Fi technology, and so only the details of the method that are particularly relevant to the present invention will be explicitly mentioned here. In the example illustrated, it is assumed that user device 11 is establishing a connection with AP1. Moreover, it is also assumed that the user device 11 has pre-installed software configured to implement certain steps of the method. The pre-installed software can, for example, be an application or "app" provided for the purpose of performing the method. This software will be described in greater detail below in relation to figure 4.

Firstly, AP1 broadcasts S101 its SSID, together with various other information, at periodic intervals, and the user device 11 receives a broadcast of this SSID as per known procedures for establishing a connection between a user device and a wireless network. The user device 11 and the wireless network can then establish a connection via these known procedures. Typically, the user must manually connect to the Wi-Fi network, since such connections are controlled by the operating system of the user device 11 rather than any application running on the operating system. To aid the user, the SSID will typically contain a recognisable string that identifies the AP as belonging to the desired network. To prevent undesired connections of the electronic device 11 to incorrect APs, AP IDs are stored by the server1 on a "white list" to thereby prevent the service from being provided via APs that are not on the list.

To then establish a connection with the server 1, and upon receipt of the SSID, the user device 11 sends S103 a first message containing a connection request to API, using standard Wi-Fi protocol.

The connection request message (the first message) includes an ID of the user device 11 and, in the described example, the ID used is the media access control (MAC) address of the user device. The MAC address is an identifier that is unique to each device that is configured to communicate using Wi-Fi technology, and so can be used to uniquely identify the user device 11. The skilled person will recognise that the ID need not be the MAC address of the user device 11, and can equally be some other identifier such as the IP address of the user device or an ID provided by the pre-installed software (App).

AP1 receives the first message containing the connection request and the ID, appends its own ID to the first message and forwards S105 the first message to the server 1 via the data connection 9.

Upon receipt of the first message that now contains the connection request, IDs of the user device 11 and API, the server 1 uses the information in the first message and a time stamp generated by the server 1 to identify S107 one or more data streams, and associated metadata, that are stored in a database on the server 1 and that are relevant to the content currently being displayed in the room containing screen1. The server 1 uses the ID of AP1 to identify the screen which the user is viewing, and the time stamp to determine the content currently being shown. The server 1 then transmits a second message which contains the metadata of the identified data stream(s) and the ID of the electronic device 11 to AP1. For this purpose, the server 1 uses the ID of AP1 to correctly address the second message.

Upon receipt of the second message containing the metadata, AP1 uses the ID of user device 11 contained within the second message to forward S109 it to the user device 11. Upon receipt of the second message at the user device 11, the user device 11 is configured to prompt the user to select S111 one of the data stream(s) described by the metadata. Upon selection of the data stream, the user device 11 is configured to send a third message identifying the selected stream to AP1. This third message again contains the ID of the user device 11. AP1 then forwards S113 the third message identifying the selected stream to server 1 whilst again appending its ID to the third message.

Subsequently, the server 1 uses the content of the third message to select the desired stream, and sends S115 the selected stream out onto the wireless network 15, and adds the ID of the user device 11. The stream is received by AP1 and forwarded S117 to the user device 11 using the appended ID. The user device 11 then receives and plays S119 the selected stream.

As noted above, the server 1 stores information regarding the time at which content is displayed and so, by using its time stamp, the server 1 can ensure that the selected stream is in synchronisation with the content as is it presented to the user.

Figure 4 illustrates screens to be displayed on a user device for user interaction with the pre-installed software during performance of the method of figure 3. The screens are provided via an application in accordance with an embodiment of the invention. In S201, the user of the user device 11 is presented with an icon 21 for launching the application. Upon selection of this icon 21, a screen S203 can be provided allowing the user to select a user interface language by selection of an icon 22, and a screen showing the language selected S205 can also be provided. The skilled person will recognise that these are optional steps since such a selection can equally be made automatically from the parameters of the user device 11, such as by selecting the language set in the user device 11. Moreover, the user interface can equally be presented in a format which requires no different languages, such as by using pictograms rather than text.

Screens providing a reminder to connect headphones S207 and a start screen S209 can also be optionally provided. In screen S211, the title of the content can be provided to allow the user of the user device 11 to confirm that the correct content has been identified by the server 1 as a result of the exchange of messages described in relation to figure 3. The user can also optionally be provided with a selectable icon 23 to allow the user to send a confirmation that the content is correctly identified to the server 1 or to make a correction to the content identified i.e. to change the content for the correct content. The user can also optionally be provided with a graphical image 24 representing the identified content.

In screen S213, the user is provided with selectable icons 25, 27, 29 to allow selection of one of the different data streams that the server 1 has identified. Typically, there will be as many icons as there are data streams identified for the content. Upon receipt of the selection as described in step S111 in relation to figure 3, the data stream is sent to the user device 11 as described in steps S113-S119. Optionally, the user can be provided with a selectable icon 31 to commence playback of the data stream, and/or a progress bar 35 indicating the relative progress through the data stream. Playback takes the form of playback of the data stream in the form of an audio track and/or captions as the case may be.

The skilled person will recognise that, under certain circumstances, the server 1 could misidentify the location of the user device 11, and therefore provide metadata for the wrong contend in step S107. This could occur, for example, if the user device 11 was located in the room containing screen 1 as illustrated in figure 2 but, owing to the signal strength received from AP2 being stronger than that from API, connected to AP2, which is located in the room containing screen2.

To address this potential problem, the optional icons 23 provided in screen S211 of the application can be used. The icons 23 can permit a user input that signals whether the metadata provided is for the desired content, thus for example the icon 23 could be configured to contain yes and no buttons or "confirm movie" and "change movie" buttons for selection by the user. In the event that the user receives in S111 metadata for the wrong content, and provides an input indicating this, the method of figure 3 can include the further steps indicated in figure 5. The method of figure 5 assumes that the steps S101-S111 of figure 3 have been carried out as described above. However, since metadata for the wrong content has been received, the user device 11 has connected to a different AP to that in the room in which the user device 11 is located. For the sake of this example, it is assumed that the user device 11 has connected to AP2. Thus, references to AP1 in the method of figure 3 are to be considered to refer to AP2 for the purposes of the description of figure 5.

In step S301, the user device sends a first additional message to AP2 indicating that the metadata for the wrong content was received. The user device 11 appends its ID to this first additional message. AP2 then forwards S303 the first additional message to the server, and appends its ID. The server 1 receives this first additional message from AP2 and, in response, generates S305 a second additional message containing the metadata for all content that corresponds to the SSID of the network 15 and a time of a further server timestamp. The metadata is grouped such that the different streams for each different content are presented together. As per step S107, the ID of the user device 11 is appended to the second additional message containing the metadata and the second additional message is sent to AP2.

Upon receipt of the second additional message, AP2 forwards S307 the second additional message to the user device 11 as per step S109. In step S309, the user device 11 receives the second additional message from step S307, displays the metadata and the user is provided with means to select the desired data stream from all of the streams available. The method then continues as per steps S113-S119 of the method described in relation to figure 3 (with references to AP1 replaced by AP2 as noted above).

In an alternative embodiment, upon receipt of the first additional message in the above described embodiment, the server 1 can generate S305 a message containing metadata of limited additional content. For example, the metadata can relate to the APs in the rooms that are either side of the room in which AP, to which the user device 11 is connected, is located.

In alternative or complementary embodiments, the APs do not broadcast their SSIDs. In such embodiments, the SSID of the AP will be known to the user device 11 prior to commencement of the connection procedure. Thus, for example, the pre-installed software on the device can be configured to store the SSID.

In alternative or complementary embodiments, the wireless network 15 can be configured to determine the location of the user device 11 to a sufficiently high accuracy to determine with a good degree of certainty in which room the user device is located. The skilled person will recognise that this can be achieved, for example, by providing multiple APs in each room and using signal strength comparisons between the APs. Alternatively, or additionally, other location determining means, such as Bluetooth beacons or satellite-based means e.g. GPS can be used. The skilled person will be familiar with how to implement such location determinations and so further details will not be provided here. In embodiments using location determining means, the method of figure 3 will be supplemented with additional information indicating the location of the user device 11 being transmitted from the user device 11 to the server 1 via AP1. Moreover, the server 1 will also store information of the physical locations of the APs within the network so as to be able to infer the correct content for which to send metadata. In embodiments where the location of the user device 11 has been determined with high accuracy, it may be unnecessary to provide any means to select metadata related to different content, since the content being viewed will be known with a high reliability.

In alternative or complementary embodiments, the server 1 can also include information indicating a current position within a data stream in messages destined for the user device 11. Thus, for example, the server 1 can indicate the current time position within a particular data stream of data that is presented to a user of the user device 11. Such information can aid in ensuring a proper synchronisation between the data from the data stream as it is presented to the user and the content that is being presented on the screen being viewed by the user. The skilled person will recognise that the information can, for example, indicate an elapsed time from the beginning of the content. The skilled person will also recognise that the messages including the data stream, sent in step S115 of figure 3 can include the current time position information.

In alternative or complementary embodiments, the data stream can include the complete audio track of the content that is being displayed to the user, rather than merely the speech and/or subtitles as described above. In such embodiments, it may be necessary to provide a more accurate means of synchronising the data stream with the displayed content. Therefore, in these embodiments, the messages exchanged between the server 1 and the user device 11 via the AP can include further data to improve the synchronisation.

In these embodiments, the method of transmitting the data stream from the server 1 to the user device 11 further includes the steps of:
1. Finding the difference between local system time in the user device 11, and that of the server 1. This is achieved using the Precision Time Protocol (PTP). The skilled person will understand how to perform such a measurement, and so further details will not be provided here.
2. Sending a test message from the user device 11 to the server 1.
3. Measuring the loopback time in the user device 11 for the test message.
4. Repeating the measurement in steps 2 and 3, possibly several times.
5. Calculating an average delay between sending the message from the server to its receipt in the user device 11 on the basis of a recent measurement from step 4.
6. Comparing the average delay to a threshold value.
7. If the delay is larger than the threshold value, then a corrective measure is taken, such as altering the synchronisation between the server system time and the data stream sent by the server.
8. Conversely, if the delay is smaller than the threshold, then no action is taken.

Typically, steps 2-8 are repeated at intervals during transmission of the data stream by the server 1 to maintain a good synchronisation and so as to cope with rewinding and fast forwarding of video.

In alternative or complementary embodiments, the method can include means to charge the user for provision of a data stream. Thus, in such methods a password for access to the wireless network 15, or the server 1, can be configured and supplied to the user upon payment of the charge, for example as a code printed on a cinema ticket. In alternative embodiments, payment can be collected during the method described in relation to figures 3 or 5, for example by having additional payment steps at a point in the method prior to the completion of step S115, which sends the data stream to the user device 11 via the relevant AP. The skilled person will be familiar with how to implement such charging methods and so further explanation will not be provided here.

In alternative or complementary embodiments, the method can allow a user to switch the data stream received by the user device 11 during presentation of the content. To enable such functionality, the software on the user device can provide the user with means to indicate that a different stream is desired, such as by listing all available data streams in a selectable manner on a display of the electronic device 11. Upon selection of a different stream, a message as per S111 of figure 3 or S309 of figure 5 can be transmitted to indicate the newly-desired data stream.

As mentioned above, embodiments can be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A server (1) for providing a service to deliver a data stream, selected from a plurality of data streams, to an electronic device (11, 13) connected to a wireless network (15), the server (1) being connectable to the wireless network (15), the wireless network (15) being enabled by an access point, AP, each data stream comprising an audio track related to a content comprising video data, the server (1) being configured to:
receive from the AP, a connection request to the service, the connection request being generated by the electronic device (11, 13) and comprising an ID for the electronic device (11, 13) requesting the connection and an AP ID added by the AP;
generate a time stamp of the connection request;
identify, based on the time indicated by the time stamp and the AP ID, a plurality of data streams associated in a database with the AP;
send to the AP, metadata describing the plurality of data streams, the metadata further comprising the electronic device ID;
receive from the AP, in response to the sending, information indicating a selection of one of the plurality of data streams and the electronic device ID, the information indicating the selection being generated by the electronic device (11, 13);
exchange a plurality of messages with the electronic device (11, 13) via the AP, so as to enable determination of an average round-trip time for messages from the electronic device (11, 13) to the server (1) and back to the electronic device (11, 13); and
send, to the AP the selected data stream tagged with the electronic device ID, so that the AP may push said data stream to the electronic device (11, 13), wherein if the average round-trip time for the messages is above a threshold value then a synchronisation between a server system time and the data stream sent by the server is altered to correct for the average delay between sending messages from the server (1) to the electronic device (11, 13).

2. The server (1) of claim 1, wherein the wireless network (15) comprises a plurality of APs each having a different ID, and the connection request to the service is received from one of the plurality of APs.

3. The server (1) of claim 2, wherein the retrieval is further based on information regarding a physical location of the electronic device (11, 13) with respect to one or more of the APs.

4. The server (1) of claim 3, wherein the positioning information is derived from signal strength data of the electronic device (11, 13) as received at a plurality of the APs or on satellite positioning data of the electronic device (11, 13).

5. The server of claim 3, wherein the positioning information is derived from a measure of the signal strength data of the AP at the electronic device, or on satellite positioning data of the electronic device (11, 13).

6. The server (1) of any of claims 2 to 5, wherein the server (1) is further configured to:
receive a correction request from the first AP, the correction request indicating that metadata for incorrect content was received; and, in response
retrieve, based on the time stamp and the ID of a second AP in the network, a second plurality of data streams associated in a database with the second AP;
send to the first AP, metadata describing the second plurality of data streams, the metadata further comprising the electronic device ID; and
receive from the first AP, in response to the sending of the second plurality of data streams, information indicating a selection of one of the second plurality of data streams and the electronic device ID.

7. The server (1) of any preceding claim, wherein the, or each, selection received is derived as a result of the server (1) sending a request to the AP regarding a language of the electronic device.

8. A wireless network (15) comprising the server (1) of any of claims 1 to 7 and one or more APs.

9. The wireless network (15) according to claim 8 comprising a plurality of APs, wherein each of the APs is configured to use the same broadcast ID for communication with electronic devices connecting to the wireless network (15).

10. A method for providing a service for delivering a data stream, selected from a plurality of data streams, to an electronic device (11, 13) connected to a wireless network (15) from a server (1) via the wireless network (15), the wireless network (15) being enabled by an access point, AP, each data stream comprising an audio track related to a content comprising video data, the method comprising:
receiving from the AP, a connection request to the service via wireless network (15) enabled by said AP, the connection request being generated by the electronic device (11, 13) and comprising an ID for the electronic device (11, 13) requesting the connection and an AP ID added by the AP;
generating a time stamp of the request;
identifying, based on the time indicated by the time stamp and the AP ID, a plurality of data streams associated in a database with the AP;
sending to the AP, metadata describing the plurality of data streams, the metadata further comprising the electronic device ID;
receiving from the AP, in response to the sending, information indicating a selection of one of the plurality of data streams and the electronic device ID, the information indicating the selection being generated by the electronic device (11, 13); and
exchanging a plurality of messages with the electronic device (11, 13) via the AP, so as to enable determination of an average round-trip time for messages from the electronic device (11, 13) to the server (1) and back to the electronic device (11, 13); and
sending, to the AP, the selected data stream tagged with the electronic device ID, so that the AP may push said data stream to the electronic device (11, 13), wherein if the average round-trip time for the message is above a threshold value then the synchronisation between a server system time and the data stream is altered to correct for the average delay between sending messages from the server (1) to the electronic device (11, 13).

11. A computer program product comprising computer readable instructions which, when run on a computer system, cause the computer system to perform the method of claim 10.

12. A computer readable medium comprising the computer program product according to claim 11.

## Patentansprüche

1. Server (1) zum Bereitstellen eines Diensts zum Liefern eines Datenstroms, ausgewählt aus einer Vielzahl von Datenströmen, an eine elektronische Vorrichtung (11, 13), die mit einem drahtlosen Netzwerk (15) verbunden ist, wobei der Server (1) mit dem drahtlosen Netzwerk (15) verbindbar ist, wobei das drahtlose Netzwerk (15) durch einen Zugangspunkt, AP, aktiviert wird, wobei jeder Datenstrom eine Audiospur in Bezug auf einen Inhalt, umfassend Videodaten, umfasst, wobei der Server (1) ausgelegt ist zum:
Empfangen, von dem AP, einer Verbindungsanforderung zu dem Dienst, wobei die Verbindungsanforderung durch die elektronische Vorrichtung (11, 13) erzeugt wird und eine ID für die elektronische Vorrichtung (11, 13), die die Verbindung anfordert, und eine durch die AP hinzugefügte AP-ID umfasst;
Erzeugen eines Zeitstempels der Verbindungsanforderung;
Identifizieren, basierend auf der durch den Zeitstempel angezeigten Zeit und der AP-ID, einer Vielzahl von Datenströmen, die in einer Datenbank mit dem AP verbunden sind;
Senden, an den AP, von Metadaten, die die Vielzahl von Datenströmen beschreiben, wobei die Metadaten ferner die ID der elektronischen Vorrichtung umfassen;
Empfangen, von dem AP, als Reaktion auf das Senden, von Informationen, die eine Auswahl von einem der Vielzahl von Datenströmen und die ID der elektronischen Vorrichtung angeben, wobei die Informationen die Auswahl angeben, die durch die elektronische Vorrichtung (11, 13) erzeugt wird;
Austauschen einer Vielzahl von Nachrichten mit der elektronischen Vorrichtung (11, 13) über den AP, um eine durchschnittliche Paketumlaufzeit für Nachrichten von der elektronischen Vorrichtung (11, 13) an den Server (1) und zurück an die elektronische Vorrichtung (11, 13) zu bestimmen; und
Senden, an den AP, des ausgewählten Datenstroms, der mit der ID der elektronischen Vorrichtung markiert ist, sodass der AP den Datenstrom per Push an die elektronische Vorrichtung (11, 13) senden kann,
wobei, wenn die durchschnittliche Paketumlaufzeit für die Nachrichten oberhalb eines Schwellwerts liegt, eine Synchronisierung zwischen einer Serversystemzeit und dem durch den Server gesendeten Datenstrom geändert wird, um die durchschnittliche Verzögerung zwischen dem Senden von Nachrichten von dem Server (1) an die elektronische Vorrichtung (11, 13) auszugleichen.

2. Server (1) nach Anspruch 1, wobei das drahtlose Netzwerk (15) eine Vielzahl von APs umfasst, die jeweils eine verschiedene ID aufweisen, und die Verbindungsanforderung zu dem Dienst von einem der Vielzahl von APs empfangen wird.

3. Server (1) nach Anspruch 2, wobei das Abrufen ferner auf Informationen in Bezug auf einen physischen Ort der elektronischen Vorrichtung (11, 13) in Bezug auf einen oder mehrere der APs basiert.

4. Server (1) nach Anspruch 3, wobei die Positionsinformationen von Signalstärkedaten der elektronischen Vorrichtung (11, 13), wie sie an einer Vielzahl der APs empfangen werden, oder von Satellitenpositionsdaten der elektronischen Vorrichtung (11, 13) abgeleitet werden.

5. Server nach Anspruch 3, wobei die Positionsinformationen von einem Maß der Signalstärkedaten des AP an der elektronischen Vorrichtung oder von Satellitenpositionsdaten der elektronischen Vorrichtung (11, 13) abgeleitet werden.

6. Server (1) nach einem der Ansprüche 2 bis 5, wobei der Server (1) ferner ausgelegt ist zum:
Empfangen einer Korrekturanforderung von dem ersten AP, wobei die Korrekturanforderung angibt, dass Metadaten für falsche Inhalte empfangen wurden; und, als Reaktion,
Abrufen, basierend auf dem Zeitstempel und der ID eines zweiten AP in dem Netzwerk, einer zweiten Vielzahl von Datenströmen, die in einer Datenbank mit dem zweiten AP verbunden sind;
Senden, an den ersten AP, von Metadaten, die die zweite Vielzahl von Datenströmen beschreiben, wobei die Metadaten ferner die ID der elektronischen Vorrichtung umfassen; und
Empfangen, von dem ersten AP, als Reaktion auf das Senden der zweiten Vielzahl von Datenströmen, von Informationen, die eine Auswahl von einem der zweiten Vielzahl von Datenströmen und die ID der elektronischen Vorrichtung angeben.

7. Server (1) nach einem der vorhergehenden Ansprüche, wobei die, oder jede, empfangene Auswahl infolgedessen abgeleitet wird, dass der Server (1) eine Anforderung an den AP in Bezug auf eine Sprache der elektronischen Vorrichtung sendet.

8. Drahtloses Netzwerk (15), umfassend den Server (1) nach einem der Ansprüche 1 bis 7 und einen oder mehrere APs.

9. Drahtloses Netzwerk (15) nach Anspruch 8, umfassend eine Vielzahl von APs, wobei jeder der APs dazu ausgelegt ist, die gleiche Übertragungs-ID zur Kommunikation mit elektronischen Vorrichtungen, die eine Verbindung zu dem drahtlosen Netzwerk (15) herstellen, zu verwenden.

10. Verfahren zum Bereitstellen eines Diensts zum Liefern eines Datenstroms, ausgewählt aus einer Vielzahl von Datenströmen, an eine elektronische Vorrichtung (11, 13), die mit einem drahtlosen Netzwerk (15) verbunden ist, von einem Server (1) über das drahtlose Netzwerk (15), wobei das drahtlose Netzwerk (15) durch einen Zugangspunkt, AP, aktiviert wird, wobei jeder Datenstrom eine Audiospur in Bezug auf einen Inhalt, umfassend Videodaten, umfasst, das Verfahren umfassend:
Empfangen, von dem AP, einer Verbindungsanforderung zu dem Dienst über das drahtlose Netzwerk (15), das durch den AP aktiviert wird, wobei die Verbindungsanforderung durch die elektronische Vorrichtung (11, 13) erzeugt wird und eine ID für die elektronische Vorrichtung (11, 13), die die Verbindung anfordert, und eine durch die AP hinzugefügte AP-ID umfasst;
Erzeugen eines Zeitstempels der Anforderung;
Identifizieren, basierend auf der durch den Zeitstempel angezeigten Zeit und der AP-ID, einer Vielzahl von Datenströmen, die in einer Datenbank mit dem AP verbunden sind;
Senden, an den AP, von Metadaten, die die Vielzahl von Datenströmen beschreiben, wobei die Metadaten ferner die ID der elektronischen Vorrichtung umfassen;
Empfangen, von dem AP, als Reaktion auf das Senden, von Informationen, die eine Auswahl von einem der Vielzahl von Datenströmen und die ID der elektronischen Vorrichtung angeben, wobei die Informationen die Auswahl angeben, die durch die elektronische Vorrichtung (11, 13) erzeugt wird; und
Austauschen einer Vielzahl von Nachrichten mit der elektronischen Vorrichtung (11, 13) über den AP, um eine durchschnittliche Paketumlaufzeit für Nachrichten von der elektronischen Vorrichtung (11, 13) an den Server (1) und zurück an die elektronische Vorrichtung (11, 13) zu bestimmen; und
Senden, an den AP, des ausgewählten Datenstroms, der mit der ID der elektronischen Vorrichtung markiert ist, sodass der AP den Datenstrom per Push an die elektronische Vorrichtung (11, 13) senden kann,
wobei, wenn die durchschnittliche Paketumlaufzeit für die Nachricht oberhalb eines Schwellwerts liegt, eine Synchronisierung zwischen einer Serversystemzeit und dem gesendeten Datenstrom geändert wird, um die durchschnittliche Verzögerung zwischen dem Senden von Nachrichten von dem Server (1) an die elektronische Vorrichtung (11, 13) auszugleichen.

11. Computerprogrammprodukt, umfassend computerlesbare Anweisungen, die bei Ausführung auf einem Computersystem bewirken, dass das Computersystem das Verfahren nach Anspruch 10 durchführt.

12. Computerlesbares Medium, umfassend das Computerprogrammprodukt nach Anspruch 11.

## Revendications

1. Serveur (1) pour fournir un service pour fournir un flux de données, sélectionné parmi une pluralité de flux de données, à un dispositif électronique (11, 13) connecté à un réseau sans fil (15), le serveur (1) pouvant être connecté au réseau sans fil (15), le réseau sans fil (15) étant activé par un point d'accès, AP, chaque flux de données comprenant une piste audio associée à un contenu comprenant des données vidéo, le serveur (1) étant configuré pour :
recevoir de l'AP une demande de connexion au service, la demande de connexion étant générée par le dispositif électronique (11, 13) et comprenant un identifiant, ID, pour le dispositif électronique (11, 13) demandant la connexion et un identifiant d'AP ajouté par l'AP ;
générer un horodatage de la demande de connexion ;
identifier, sur la base de l'heure indiquée par l'horodatage et de l'ID de l'AP, une pluralité de flux de données associés dans une base de données avec l'AP ;
envoyer à l'AP des métadonnées décrivant la pluralité de flux de données, les métadonnées comprenant en outre l'ID du dispositif électronique ;
recevoir de l'AP, en réponse à l'envoi, des informations indiquant une sélection d'un de la pluralité de flux de données et l'ID du dispositif électronique, les informations indiquant la sélection étant générée par le dispositif électronique (11, 13) ;
échanger une pluralité de messages avec le dispositif électronique (11, 13) par l'intermédiaire de l'AP, de manière à permettre la détermination d'un temps aller-retour moyen pour les messages du dispositif électronique (11, 13) au serveur (1) et retour au dispositif électronique (11, 13) ; et
envoyer à l'AP le flux de données sélectionné étiqueté avec l'ID du dispositif électronique, de manière à ce que l'AP puisse pousser ledit flux de données vers le dispositif électronique (11, 13),
dans lequel, si le temps aller-retour moyen des messages est supérieur à une valeur seuil, une synchronisation entre un temps du système serveur et le flux de données envoyé par le serveur est alors modifiée pour corriger le délai moyen entre l'envoi des messages du serveur (1) au dispositif électronique (11, 13) .

2. Serveur (1) selon la revendication 1, dans lequel le réseau sans fil (15) comprend une pluralité d'AP ayant chacun un ID différent, et la demande de connexion au service est reçue de l'un de la pluralité d'AP.

3. Serveur (1) selon la revendication 2, dans lequel la récupération est en outre basée sur des informations concernant un emplacement physique du dispositif électronique (11, 13) par rapport à un ou plusieurs des AP.

4. Serveur (1) selon la revendication 3, dans lequel les informations de positionnement sont dérivées de données d'intensité du signal du dispositif électronique (11, 13) telles qu'elles sont reçues sur une pluralité des AP, ou de données de positionnement par satellite du dispositif électronique (11, 13).

5. Serveur selon la revendication 3, dans lequel les informations de positionnement sont dérivées d'une mesure des données d'intensité du signal de l'AP sur le dispositif électronique, ou de données de positionnement par satellite du dispositif électronique (11, 13).

6. Serveur (1) selon l'une quelconque des revendications 2 à 5, dans lequel le serveur est en outre configuré pour :
recevoir une demande de correction de la part du premier AP, la demande de correction indiquant que des métadonnées relatives à un contenu incorrect ont été reçues ; et, en réponse,
récupérer, sur la base de l'horodatage et de l'ID d'un second AP du réseau, une seconde pluralité de flux de données associés dans une base de données avec le second AP ;
envoyer au premier AP des métadonnées décrivant la seconde pluralité de flux de données, les métadonnées comprenant en outre l'ID du dispositif électronique ; et
recevoir du premier AP, en réponse à l'envoi de la seconde pluralité de flux de données, des informations indiquant une sélection de l'un de la seconde pluralité de flux de données et de l'ID du dispositif électronique.

7. Serveur (1) selon l'une quelconque des revendications précédentes, dans lequel la ou chaque sélection reçue est dérivée suite à l'envoi par le serveur (1) d'une demande à l'AP concernant une langue du dispositif électronique.

8. Réseau sans fil (15) comprenant le serveur (1) de l'une quelconque des revendications 1 à 7, et un ou plusieurs AP.

9. Réseau sans fil (15) selon la revendication 8 comprenant une pluralité d'AP, où chacun des AP est configuré pour utiliser le même ID de diffusion pour communiquer avec les dispositifs électroniques se connectant au réseau sans fil (15).

10. Procédé pour fournir un service pour fournir un flux de données, sélectionné parmi une pluralité de flux de données, à un dispositif électronique (11, 13) connecté à un réseau sans fil (15), depuis un serveur (1) par l'intermédiaire du réseau sans fil (15), le réseau sans fil (15) étant activé par un point d'accès, AP, chaque flux de données comprenant une piste audio associée à un contenu comprenant des données vidéo, le procédé comprenant les étapes suivantes :
recevoir de l'AP une demande de connexion au service par l'intermédiaire d'un réseau sans fil (15) activé par ledit AP, la demande de connexion étant générée par le dispositif électronique (11, 13) et comprenant un ID pour le dispositif électronique (11, 13) demandant la connexion et un ID d'AP ajouté par l'AP ;
générer un horodatage de la demande ;
identifier, sur la base de l'heure indiquée par l'horodatage et de l'ID de l'AP, une pluralité de flux de données associés dans une base de données avec l'AP ;
envoyer à l'AP des métadonnées décrivant la pluralité de flux de données, les métadonnées comprenant en outre l'ID du dispositif électronique ;
recevoir de l'AP, en réponse à l'envoi, des informations indiquant une sélection d'un de la pluralité de flux de données et l'ID du dispositif électronique, les informations indiquant la sélection étant générée par le dispositif électronique (11, 13) ; et
échanger une pluralité de messages avec le dispositif électronique (11, 13) par l'intermédiaire de l'AP, de manière à permettre la détermination d'un temps aller-retour moyen pour les messages du dispositif électronique (11, 13) au serveur (1) et retour au dispositif électronique (11, 13) ; et
envoyer à l'AP le flux de données sélectionné étiqueté avec l'ID du dispositif électronique, de manière à ce que l'AP puisse pousser ledit flux de données vers le dispositif électronique (11, 13),
dans lequel, si le temps aller-retour moyen du message est supérieur à une valeur seuil, la synchronisation entre un temps du système serveur et le flux de données est alors modifiée pour corriger le délai moyen entre l'envoi des messages du serveur (1) au dispositif électronique (11, 13).

11. Produit programme informatique comprenant des instructions lisibles par ordinateur qui, lorsqu'elles sont exécutées sur un système informatique, amènent le système informatique à exécuter le procédé de la revendication 10.

12. Support lisible par ordinateur comprenant le produit programme informatique selon la revendication 11.
